# EUROPEAN PATENT SPECIFICATION

(11) **EP 2 959 466 B1**
(45) Date of publication and mention of the grant of the patent: **20.03.2019**
(21) Application number: 14706671.6
(22) Date of filing: 19.02.2014
(51) Int. Cl.: G08B 25/00, H04L 12/28

(54) **ALARM NOTIFICATION SYSTEM**
ALARMBENACHRICHTIGUNGSSYSTEM
SYSTÈME DE NOTIFICATION D'ALARME

(30) Priority: 21.02.2013 GB 201303084
(43) Date of publication of application: 30.12.2015
(73) Proprietor: VDT Direct Ltd, Blidworth, Nottinghamshire NG21 0RY (GB)
(72) Inventor: MASON, Clive, Mansfield Nottinghamshire NG18 4UH (GB); YOUNG, Mark, Mansfield Nottinghamshire NG18 4YP (GB)
(74) Representative: Black, Diego
(86) International application number: PCT/GB2014/050482
(87) International publication number: WO 2014/128458

(56) References cited:
- WO-A1-2009/070882
- US-A1- 2010 164 722
- US-A1- 2012 154 138
- US-A1- 2012 229 271

## Description

### Summary of the invention

The invention relates to a system for ensuring that the user of the system receives a notification that an alarm has been generated.

### Background

Alarms are used for monitoring people and premises in multiple locations. For example an alarm may be installed to generate a one or more signals for security, fire, smart grid or medical reasons. Such alarms may be in the form of known fire alarms, intruder alarms, CCTV devices etc. More than one signal can be attached to an alarm. In an installation, for example an office building, factory site etc., there are typically several alarms (in large installations there may be several tens or hundreds of such alarms). Typically one or more persons are assigned to monitor the alarm(s) associated with an installation and in the event of an alarm being generated (for example in the event of an unauthorised entry) the appropriate person is notified.

The process of notify the relevant person(s) of the alarm may be handled by a call centre, or the like, in which the alarms of a large number of installations are monitored and in the event of an alarm the relevant person is identified and contacted by telephone. Such systems require large scale infrastructure as well high costs in order to staff the cal centre.

An important aspect of such systems is that the end user is notified of the alarm. In a call centre based environment the user is notified by a telephone call. Therefore the user is able to react to the activation of the alarm. Such notification systems must be robust and fully auditable in order to ensure the receipt of the alarm

Patent applications US 2012/154138, US 2012/229271, US 2010/164722 and WO 2009/070882 disclose prior art alarm notification systems.

In order to mitigate at least some of the above identified problems in the prior art, there is provided an alarm notification system according to claim 1, a method according to claim 10 and computer readable medium storing instructions according to claim 11.

Other aspects and advantages of the invention will be apparent from the following description and appended claim set.

### Brief description of the drawings

Embodiments of the invention are now described, by way of example only, with reference to the accompanying drawing in which:
Figure 1 is a schematic of the system;
Figure 2 is a flow chart of the process of sending an alarm to a user device according to an aspect of the invention;
Figure 3 is a flow chart of the process of an SMS timer; and
Figure 4 shows the flow chart of the process of a repeat alarm timer.

### Detailed description of an embodiment

The present invention relates to improvements in hosted alarm receiving and delivery platform. Preferably, such platforms are hosted in the cloud, and receive alarms from various types of product (for example security, CCTV, fire, medical, smart grid). The cloud based platform processes the alarm and then distributes the alarm to one or more users in order to inform them of the alarm. The alarm is distributed to a PC and/or mobile telephone and/or tablet device, or the like, associated with the recipient. The recipient then logs onto a website or dashboard or mobile application and accesses information regarding the alarm through the cloud based system.

For example, the user may be in charge of security at a remote location (e.g. a warehouse) and upon receipt of the alarm would view information associated with the alarm and subsequently determine if they need to investigate the alarm further (e.g. by visiting the warehouse). Such systems therefore do not require call centres, or the like, to inform the user of an alarm as they are informed via the user's PC, smartphone, tablet etc.

Typically an alarm system may inform the user of a number of different alarms, of differing importance. For example an alarm may inform the remote user of a change in environmental conditions in a building (which may or may not be critical) or that a fire or intruder have been detected. Therefore, the system must be robust and configured to deliver the alarm in a timely and efficient manner. It is also important that the system is able to determine if an alarm has been received by the end user.

Given the potential importance of certain alarms, which may be life-threatening in some circumstances, it is undesirable to use "send and forget" type technologies to inform a user of an alarm. For example the use of an email message would provide a low cost method of sending alarm information to a mobile telephone or computer however it does not provide the alarm host with a sufficiently robust mechanism for ensuring that the end user has received and viewed the alarm.

The invention provides a robust system which ensures that the end user has not only received, but viewed the alarm, as well as establishing a full audit trail of each alarm instance from generation through to individual user notification, delivery and confirmation of viewing. The auditing safe-guards the reputation of the hardware and software by illustrating to users every effort has been made to deliver the alarm to their mobile device and can be called upon to resolve any problems with alarm delivery a particular user has.

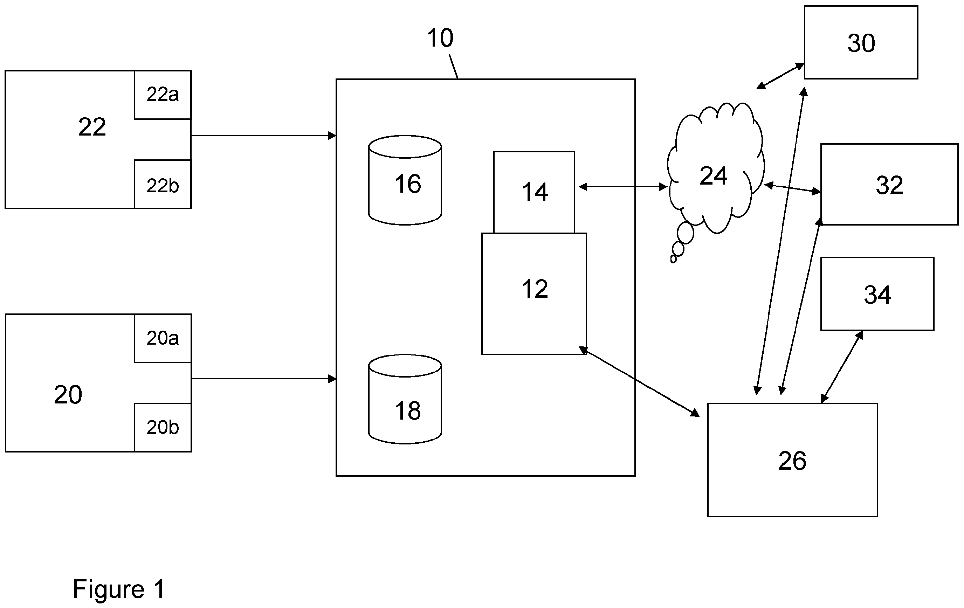

Figure 1 shows a schematic of the apparatus according to an aspect of the invention. There is shown the alarm host centre 10, comprising an alarm host server 12, a persistent connection server 14, a user database 16 and an audit database 18.

The alarm host centre 10 monitors a plurality of external sites 20, 22. For clarity only two external sites are shown, though in practice several sites are monitored. Each site has one or more alarms (20a, 20b, 22a, 22b). For clarity only two alarms per site are shown though in practice each site may have many more alarms.

The alarms 20a, 20b may be any type of known alarm, such as intruder alarm, fire alarm, medical alarm, CCTV etc. When an alarm is triggered a signal is sent to the alarm host server 12. The alarm host server 12 therefore monitors the status of multiple alarms at multiple external sites.

When an alarm is received (e.g. from 20a) the alarm host server 12 queries user database 16 in order to determine one or more users who are associated with the alarm and who should be contacted in the event of an alarm event. The user database 16 therefore contains information regarding one or more users and includes information about how the users should be contacted. The user database 16 also contains information about the user's device(s) that they want to be informed on. For example the user database 16 would typically contain one or more email addresses, and one or more mobile telephone numbers for a given user. The user database 16 preferably also contains further contact details such as instant messenger names etc. Therefore, in the event that a user needs to be notified there are preferably several different contact methods available.

The alarm host centre 10 is connected to a plurality of user devices (30, 32) via a persistent connection server 14 through an internet connection 24. Persistent connections are known to include but not limited to HTTP in which an open TCP connection is able to send and receive multiple request and/or response without having to open a new connection for each action. The use of persistent connection server 14 allows for each user device connected to the server (30, 32) to maintain a private tunnel in which the traceability of messages can be fully audited. As the persistent connection server 14 is held at the alarm host centre 10, the alarm host is able to tell when a message has been sent to an individual user device.

As not all devices are connected via persistent connection (e.g. user device 34) in order to maintain a fully robust system other forms of connection are required. The alarm host server 12 is also connected to a push notification server 26. In practice as the push notification server 26 is a third party server e.g. an Apple (RTM) server for iOS devices, the alarm host server 12 is connected to multiple push notification servers though for clarity only one server is shown in Figure 1.

A device (for example user device 32) may be connected to both the persistent connection server 14 and the third party push notification server 26.

The alarm host centre 10 also preferably comprises an email server (not shown) and a GSM connection in order to send SMS and/or MMS messages (not show). Therefore, the alarm host centre 10 is able to send and receive messages to a multitude of different type of end user devices, including but not limited to PCs, smart phones, tablet computers, and laptops.

The alarm host centre 10 is shown in Figure 1 as comprising one server for clarity. In further embodiments the centre 10 may comprises multiple servers (not shown) which may be located across multiple sites (not shown). The servers in further embodiments are virtual servers.

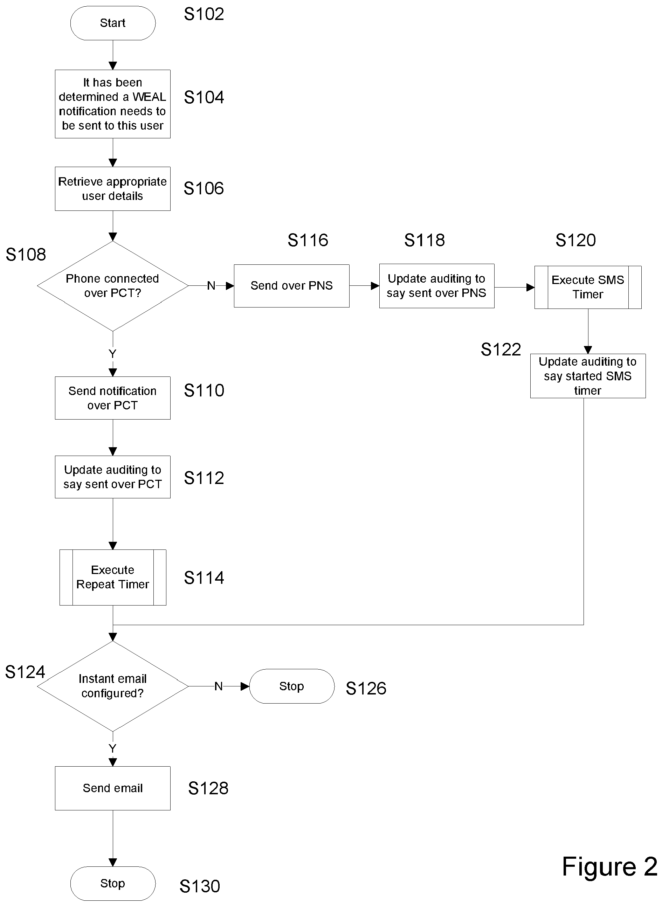

Figure 2 is a flowchart of the process of sending an alarm to a user device according to an aspect of the invention. In Figure 2 there is shown the starting of the process at step S102.

At step S102 an alarm is received from an external location (20) by the alarm host server 12. The alarm host server 12 is hosted by the alarm host 10 and is configured to monitor a number of alarms (20a, 20b) from a plurality of remote locations.

Users of the system are registered in advance with the alarm host server 12 and are associated with one or more alarms. The registration of a user to the service occurs via known means.

In practice, a user would be identified as a company (or the like) and the remote location would be the area which they are monitoring (for example, a warehouse). At step S102, the severity or type of alarm is determined. For example, the source of the alarm is recorded (for example, fire alarm, CCTV, medical etc) as other information regarding the alarm (such as time, date etc) are also determined.

At step S104, it is determined that the notification system should inform the user of the alarm type at step S102. In such systems it is not necessarily desirable to inform a user of each and every alarm. For example, an alarm which measures the ambient temperature of a building which records a minor increase in temperature may not necessarily need to be notified to the end user; however an alarm which is indicative of a fire occurring within a building would be notified to the user. The determination as to whether a user is informed may be set by user preference.

At step S106, the system identifies the user(s) associated with the location of the alarm, and retrieves appropriate contact details for the users from the user database 16. The user details retrieved at step S106 preferably also contain information regarding the type of notification to be sent to the user (e.g. notification sent to a users PC, mobile device, tablet computer etc) as well as the appropriate contact details (telephone number, IP address, instant messaging address etc.).

At step S108, it is determined whether the users mobile device (as determined at step S106) is connected to the alarm host 10 using a persistent connection server 14. The persistent connection technology establishes a constant socket connection between the end users device (e.g. PC, mobile device etc) and the alarm host 10. This connection acts as a permanent and private data tunnel in which data is sent between a connected device and the server. Preferably, the connected user device 30, 32 has a dedicated application program (app) which establishes and maintains the permanent connection between the device and the persistent connection server. The use of the persistent connection server 14 allows the alarm host 10 to determine whether the end user device 30 is in connection with the server, and therefore able to receive information from the host server.

At step S110 a notification is sent to the user device (PC, mobile telephone, smart phone, tablet computer etc.) via the persistent connection server 14 using the persistent connection technology (PCT). The notification preferably contains information regarding the location of the alarm, the time that the alarm was detected, and the severity of the alarm. Further information may also be included, or removed from the notification, according to user preference. Preferably, the notification also confirms some form of alarm confirmation response (such as a selectable portion of the message) in order to determine whether the alarm has been seen as well as received by the user of the mobile device.

At step S112 the server writes to the audit database 18 information regarding the sending of the notification over the PCT connection and persistent connection server 14, as well as the time and date of the connection and information regarding the device to which the alarm was sent. This allows for a full auditing process to occur at a later date if required.

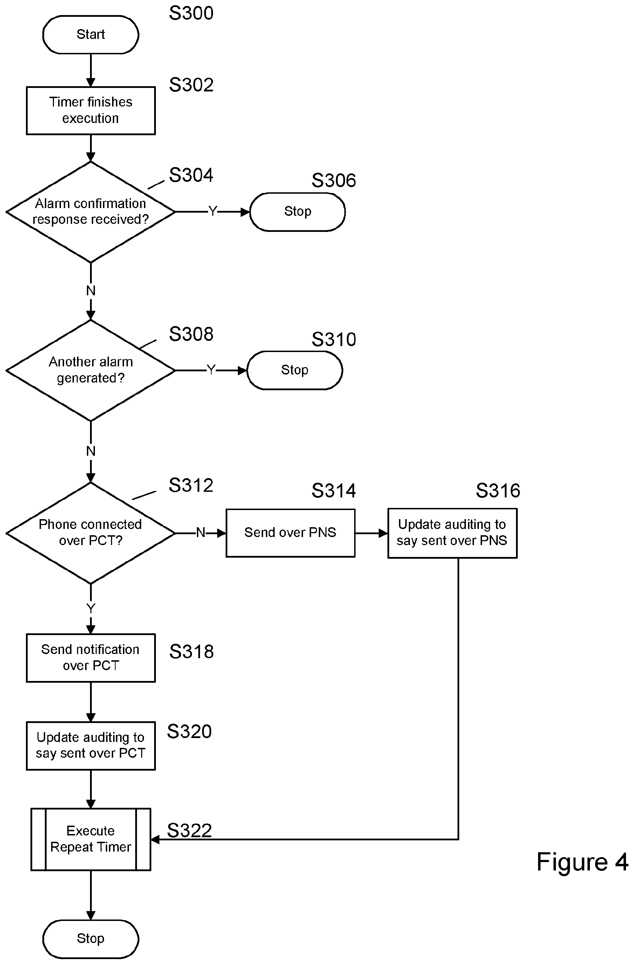

In order to maintain the robustness of the system, messages are sent to the end user device(s) in a multiple format over an extended period of time until such time that it can be established that the end user has not only received the message but has also reviewed it. To this extent, the system utilises a repeating sending methodology in which the alarm is sent to the end user multiple times. At step S114 the "repeat alarm timer", which defines the period of time between multiple messages being sent, is begun. The feature of the repeat timer is described in further detail with reference to Figure 4.

If at step S108 it is determined that there is no connection between the persistent connection server 14 and the end user device (e.g. the connection has been dropped or was never established), the notification is sent to the end user at step S116 using a push notification service via a third party push server 26. Push notification services are known in the art and enable a third party to send a message to a mobile device. The message is sent via a third party server 26 (for example, a device running iOS the message would be sent via the Apple RTM servers, similarly a Blackberry device would use a RIM (RTM) server). As push notification services are "send and forget" type services in which the sender of the messages has no control regarding the receipt of the message, (i.e. it is impossible for the sender of the message to determine whether the receiver of the message is in communication with the third party server, and therefore able to receive the message) the use of push notifications is a less preferred notification service than the use of the PCT technology.

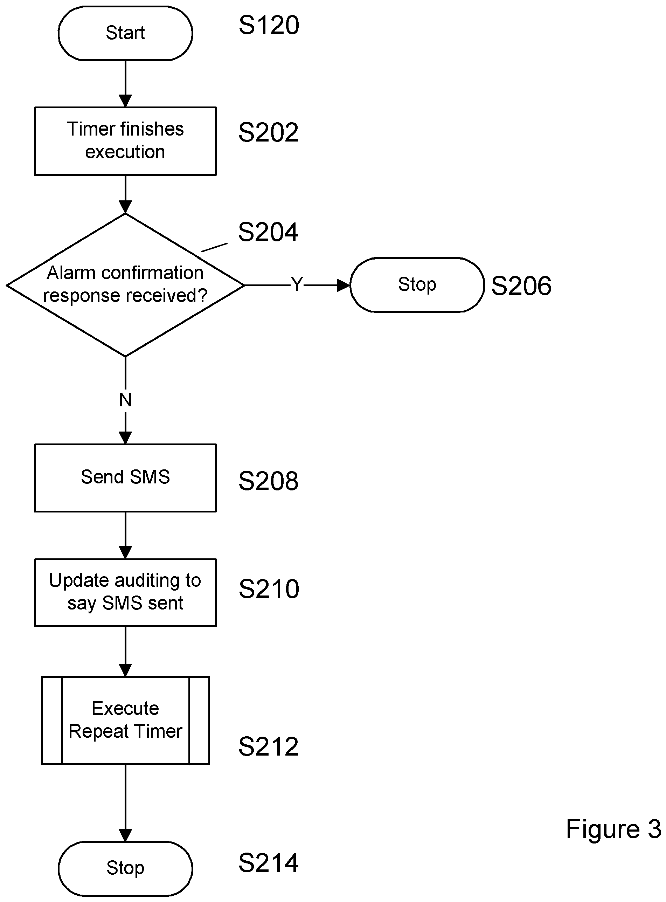

At step S118 the audit database 18 is updated to record the fact that the alarm was sent using the push notification service. At step S120 the system executes the SMS timer (as described in further detail with reference to Figure 3) and at step S122 updates the audit database 18 to state that the SMS timer has started.

A key aspect of the invention is the robust nature in ensuring that the alarm sent by the system is received by the end user(s). As an alarm may be activated during any time of the day, a user may not necessarily be in contact with their PC or tablet device, the invention sends the alarm notification via multiple routes or sources in order to ensure that the alarm notification is timely received by the end user. Accordingly, at step S124 an instant email and/or instant messaging service is used in order to send an alarm notification to the user. As not all users will have instant messaging or instant email services configured on their client devices, at step S124 it is determined whether the user preferences states if a user is able to receive such email messages. If the user is unable to receive such instant messaging, the process goes to step S126 and then stops. The users' email addresses and/or instant messaging details are stored in the user database 16, which is interrogated by the alarm host server 12 to retrieve the relevant information in the known manner.

If it is determined that the user is able to receive the instant email, the process continues to step S128 and the instant email, including the alarm notification information, is sent to the end user(s). The process then continues to step S130 and ceases.

Figure 3 describes in further detail the process of the SMS timer as mentioned in step S120. The SMS timer is used to overcome the deficiencies regarding the push notification services which as describes are "send and forget" type systems and therefore which are dependent on the success of the message being sent on third party servers, and furthermore do not provide the alarm host with any security that the message has been duly received by the end user. Accordingly, to provide a further robustness to the alarm delivery system the present invention also uses an SMS delivery system to inform the end user of the alarm notification.

In Figure 3 there is shown the starting of the process which is equivalent to step S120. Once the SMS timer has started the timer finishes an execution at step S202 in which the timer has been set to run for a predetermined length of time. The length of time may be changed according to the alarm host 10 or end user preference, but is preferably set in the order of one minute. Once the timer has expired (e.g. after one minute of the initial sending of the alarm notification message over the push notification server 26 as shown in step S116) the alarm hosr server 12 checks to see if an alarm confirmation response has been received at step S204. If the confirmation response has been received the process continues to step S206 and stops. As the confirmation response is indicative of the user not only having received but having seen the alarm notification, there is no need to continue to send further alarm notification messages.

In the event that the user has not indicated that the alarm has been seen via the alarm confirmation message the process continues to step S208 in which an SMS or MMS message is sent to the users mobile device or devices at step S208. The sending of the SMS or MMS message is performed using known methods. The users' contact numbers are stored in the user database 16 and are retrieved by the alarm host server 12 in a known manner.

In order to maintain the fully audited nature of the system, the audit database 18 is updated to include the details of the sending of the SMS message at step S210. Once the audit database 18 has been fully updated, the process continues to step S212 (which is equivalent to step S114) in which the repeat timer is executed. Accordingly, in the preferred embodiment only one SMS alarm is generated for each alarm per user. However, in further embodiments two or more SMS messages may be sent, though it is found that the sending of multiple SMS messages to inform a user of an alarm is less preferable.

In the event that the system does not receive the alarm confirmation response from the SMS message as per step S204, or in the event that the message was sent over a PCT connection, in order to ensure that the robustness of the system a repeat alarm timer is also included, in which the delivery notifications are constantly sent until such time that an alarm confirmation response has been received by the system. If the alarm has not been confirmed by the end user, the system checks to see if another alarm has been generated from the same site and in a preferred embodiment if a new alarm is present then no further notifications are attempted for the original alarm as the new alarm will supersede the original alarm. In further embodiments, a decision is made regarding the severity of the two alarms and the most critical alarm is repeated until such time that a notification has been received.

Figure 4 shows the flow chart of the process of a repeat alarm timer, which preferably executes a maximum of twelve times in a ten minute interval, and if no alarm confirmation response has been received after the twelfth attempt, the system will cease to send repeat alarm notification messages. In a further embodiment, the repeat alarm timer continues until such time that a response has been received, though this is less preferred as it is found that if the messages are not received within the first twelve attempts, it is unlikely that the sending of repeat messages after such time would result in the receipt of an alarm confirmation message and may antagonise the end user.

In Figure 4 there is shown the timer finishing execution at step S302 in which the countdown to begin a new repeat timer has expired. At step S304 it is checked whether the alarm confirmation response has been received, and if it has been received the process stops at step S306. This would be indicative of the user having received the alarm notification message and accordingly there is no need to send further notification messages to the end user. Preferably at step S306, the audit database 16 is updated to indicate that the alarm confirmation message was received and includes details of the time that the message was received, and the sender of the confirmation message in the event that the alarm was sent by multiple users.

At step S308 it is checked whether another alarm has been generated, and in a preferred embodiment if another alarm has been generated the process stops at step S310. If no other alarm has been generated the process continues to step S312 in which the connection type is determined. If the user device is connected via a PCT then the process continues to step S318, and if no PCT connection is established the process continues to step S314.

In the event that no PCT connection is available between the alarm host server and the end users device (preferably a mobile or tablet device) a repeat alarm message is sent over a push notification server 26 at step S314, and the audit database 18 is updated at step S316 in the previously described manner.

In the event that a PCT connection is established between the alarm host server and the end users device the process continues to step S318 and an alarm notification is sent using the PCT technology using the persistent connection server 14. The audit database 18 is further updated at step S320 and the process continues to step S322. At step S322 the repeat timer process is repeated as described above until such time that either a notification/alarm confirmation response has been received or the repeat process has been executed the maximum number of times (preferably twelve).

Accordingly, the above system provides a robust notification service in order to ensure that the alarm is received by the end users.

In a preferred embodiment the alarm confirmation response message may be in multiple formats. If the initial alarm, or indeed the repeat alarm, is sent over the PCT connection, the alarm notification message comprises a response box which when selected by the end user sends a confirmation message to the alarm host server indicating that the message sent over the PCT connection has been received.

In the event that the message is sent using the push notification service, the message further comprises instructions to the end user to send a response using publicly available internet protocols to the alarm host. Accordingly, by the user actioning this response the alarm host server is able to determine that the user has received the alarm notification message.

In the event that the alarm notification is sent via an SMS message, the SMS message comprises a hyperlink which the end user selects which sends the end user to a landing page / screen such as but not limited to a web page or mobile application which is generated in a known manner in response to the alarm being sent. The accessing of the uniquely generated landing page / screen by the end users client device (i.e. mobile phone or smart phone device) would indicate to the alarm host server that the message has been received. Alternatively, the SMS may also contain instructions for the end user to send a SMS message in response to indicate that they have received the message.

Therefore, the present invention provides a fully auditable alarm notification system in which alarms are generated and delivered in a robust manner. As some alarms are critical the invention provides a system which sends the alarms over multiple channels to ensure the timely delivery of the alarm to the end user. In the event of a dispute between the alarm host and the end user, the audit database provides a full record of the sending of the alarms and the user's response, via the alarm delivery confirmation message. Such a system therefore allows for a cloud based alarm notification service reducing the alarm host's requirements in terms of overheads when compared to a call centre based operation.

## Claims

1. An alarm notification system comprising:
a first central server (10);
a first remote alarm of a one or more remote alarms (20a, 20b, 22a, 22b); and
a first device (30, 32, 34);
the first central server configured to monitor the status of the one or more remote alarms, and in the event of the status of the first remote alarm changing, generating an alert to send to the first remote device;
the first central server further configured to determine if the first remote device is connected to the alarm notification system by a persistent connection, and in the event that the first remote device is connected by the persistent connection sending an alarm notification message via the persistent connection to the first remote device;
and in the event that the first remote device is not connected by a persistent connection sending the alarm notification message via a push notification service to the first remote device;
wherein the alarm notification message comprises a selectable portion, wherein the selection of the selectable portion by a user of the first remote device is indicative of the user having received and reviewed the alarm notification message; and
wherein the selection of the selectable portion results in the generation of a response message, said response message being sent to the first central server and indicative of the message having been reviewed.

2. An alarm notification system of claim 1 wherein the selectable portion of the alarm confirmation message is a hyperlink and accessing of the web page associated with the hyperlink is indicative to the central server of the alarm notification message having been reviewed by an end user.

3. An alarm notification system of any of claims 1 to 2 wherein in the event that the central server has not received an indication that the alarm has been reviewed, sending a further alarm notification message to the first user device.

4. An alarm notification system of claim 3 wherein the further notification is sent to the first user device via SMS and/or MMS.

5. An alarm notification system of claim 3 or 4 wherein the further notification is sent to the first user device via email and/or instant messaging.

6. An alarm notification system of any of claims 3 to 5 wherein the alarm notification is sent a plurality of times preferably a maximum of 12 times.

7. An alarm notification system of any of claims 3 to 6 wherein no further messages are sent when the central server has received an indication that the end user has reviewed the message.

8. An alarm notification system of any preceding claim comprising one or more further servers.

9. An alarm notification system of any preceding claim wherein the server is a virtual server.

10. A method comprising the steps of:
monitoring, at a first central server (10) of an alarm notification system, the status of one or more remote alarms (20a, 20b, 22a, 22b);
generating, at the first central server, an alert to send to a first remote device (30, 32, 34) in response to the status of a first remote alarm changing;
determining, at the first central server, if the first remote device is connected to the alarm notification system by a persistent connection such that:
in accordance with a determination that the first remote device is connected to the alarm notification system by a persistent connection:
sending, at the first central server, an alarm notification message to the first device via the persistent connection;
in accordance with a determination that the first remote device is not connected to the alarm notification system by a persistent connection:
sending, at the first central server, an alarm notification message to the first device via a push notification service;
wherein the alarm notification message comprises a selectable portion, wherein the selection of the selectable portion by a user of the first remote device is indicative of the user having received and reviewed the alarm notification message; and
wherein the selection of the selectable portion results in the generation of a response message, said response message being sent to the central server and indicative of the message having been reviewed.

11. A computer readable medium storing instructions which when executed by a central server of an alarm notification system according to claim 1 cause the central server to perform a method as in claim 10.

## Patentansprüche

1. Alarmbenachrichtigungssystem, umfassend:
einen ersten zentralen Server (10);
einen ersten Fernalarm eines oder mehrerer Fernalarme (20a, 20b, 22a, 22b); und
eine erste Vorrichtung (30, 32, 34);
wobei der erste zentrale Server konfiguriert ist, um den Status des einen Fernalarms oder der mehreren Fernalarme zu überwachen und im dem Fall, dass sich der Status des ersten Fernalarms ändert, ein Warnsignal zu erzeugen, um dieses an die erste Fernvorrichtung zu senden;
wobei der erste zentrale Server ferner konfiguriert ist, um zu bestimmen, ob die erste Fernvorrichtung über eine dauerhafte Verbindung mit dem Alarmbenachrichtigungssystem verbunden ist, und für den Fall, dass die erste Fernvorrichtung über die dauerhafte Verbindung verbunden ist, eine Alarmbenachrichtigung über die dauerhafte Verbindung an die erste Fernvorrichtung zu senden;
und für den Fall, dass die erste Fernvorrichtung nicht über eine dauerhafte Verbindung verbunden ist, die Alarmbenachrichtigung über einen Push-Benachrichtigungsdienst an die erste Fernvorrichtung zu senden;
wobei die Alarmbenachrichtigung einen wählbaren Abschnitt aufweist, wobei die Auswahl des wählbaren Abschnitts durch einen Benutzer der ersten Fernvorrichtung darauf hinweist, dass der Benutzer die Alarmbenachrichtigung empfangen und durchgesehen hat; und
wobei die Auswahl des wählbaren Abschnitts zur Erzeugung einer Antwortnachricht führt, wobei die Antwortnachricht an den ersten zentralen Server gesendet wird und anzeigt, dass die Nachricht durchgesehen wurde.

2. Alarmbenachrichtigungssystem nach Anspruch 1, wobei der wählbare Abschnitt der Alarmbestätigungsnachricht ein Hyperlink ist und der Zugriff auf die dem Hyperlink zugeordnete Webseite den zentralen Server darauf hinweist, dass die Alarmbenachrichtigung von einem Endbenutzer durchgesehen wurde.

3. Alarmbenachrichtigungssystem nach einem der Ansprüche 1 bis 2, wobei für den Fall, dass der zentrale Server keinen Hinweis darauf erhalten hat, dass der Alarm durchgesehen wurde, eine weitere Alarmbenachrichtigung an die erste Benutzervorrichtung gesendet wird.

4. Alarmbenachrichtigungssystem nach Anspruch 3, wobei die weitere Benachrichtigung an die erste Benutzervorrichtung per SMS und/oder MMS gesendet wird.

5. Alarmbenachrichtigungssystem nach Anspruch 3 oder 4, wobei die weitere Benachrichtigung an die erste Benutzervorrichtung per E-Mail und/oder Instant Messaging gesendet wird.

6. Alarmbenachrichtigungssystem nach einem der Ansprüche 3 bis 5, wobei die Alarmbenachrichtigung mehrmals, vorzugsweise maximal 12-mal, gesendet wird.

7. Alarmbenachrichtigungssystem nach einem der Ansprüche 3 bis 6, wobei keine weiteren Nachrichten gesendet werden, wenn der zentrale Server einen Hinweis empfangen hat, dass der Endbenutzer die Nachricht durchgesehen hat.

8. Alarmbenachrichtigungssystem nach einem der vorhergehenden Ansprüche, aufweisend einen oder mehrere weitere Server.

9. Alarmbenachrichtigungssystem nach einem der vorhergehenden Ansprüche, wobei der Server ein virtueller Server ist.

10. Verfahren, umfassend die Schritte:
Überwachen des Status eines Fernalarms oder mehrerer Fernalarme (20a, 20b, 22a, 22b) auf einem ersten zentralen Server (10) eines Alarmbenachrichtigungssystems;
Erzeugen eines Warnsignals auf dem ersten zentralen Server zum Senden an eine erste Fernvorrichtung (30, 32, 34) als Reaktion darauf, dass sich der Status des ersten Fernalarms ändert;
Bestimmen auf dem ersten zentralen Server, ob die erste Fernvorrichtung über eine dauerhafte Verbindung mit dem Alarmbenachrichtigungssystem verbunden ist, so dass:
wenn bestimmt wurde, dass die erste Fernvorrichtung über die dauerhafte Verbindung mit dem Alarmbenachrichtigungssystem verbunden ist:
Senden einer Alarmbenachrichtigung von dem ersten zentralen Server über die dauerhafte Verbindung an die erste Vorrichtung;
wenn bestimmt wurde, dass die erste Fernvorrichtung nicht über eine dauerhafte Verbindung mit dem Alarmbenachrichtigungssystem verbunden ist:
Senden einer Alarmbenachrichtigung von dem ersten zentralen Server an die erste Vorrichtung über einen Push-Benachrichtigungsdienst;
wobei die Alarmbenachrichtigung einen wählbaren Abschnitt aufweist, wobei die Auswahl des wählbaren Abschnitts durch einen Benutzer der ersten Fernvorrichtung darauf hinweist, dass der Benutzer die Alarmbenachrichtigung empfangen und durchgesehen hat; und
wobei die Auswahl des wählbaren Abschnitts zur Erzeugung einer Antwortnachricht führt, wobei die Antwortnachricht an den zentralen Server gesendet wird und anzeigt, dass die Nachricht durchgesehen wurde.

11. Computerlesbares Medium, das Anweisungen speichert, die, wenn sie von einem zentralen Server eines Alarmbenachrichtigungssystems nach Anspruch 1 ausgeführt werden, den zentralen Server dazu veranlassen, ein Verfahren nach Anspruch 10 durchzuführen.

## Revendications

1. Système de notification d'alarme comprenant :
un premier serveur central (10),
une première alarme à distance parmi une ou plusieurs alarmes à distance (20a, 20b, 22a, 22b), et
un premier dispositif (30, 32, 34),
le premier serveur central configuré pour surveiller l'état de l'une ou des plusieurs alarmes à distance, et, dans le cas où l'état de la première alarme à distance change, pour générer une alerte à envoyer au premier dispositif à distance,
le premier serveur central étant, en plus, configuré pour déterminer si le premier dispositif à distance est connecté au système de notification d'alarme par une connexion persistante, et dans le cas où le premier dispositif à distance est connecté par une connexion persistante, pour envoyer un message de notification d'alarme au premier dispositif à distance via la connexion persistante,
et dans le cas où le premier dispositif à distance n'est pas connecté par une connexion persistante, pour envoyer le message de notification d'alarme au premier dispositif à distance via un service de notification push,
le message de notification d'alarme comprenant une partie pouvant être sélectionnée, la sélection de la partie pouvant être sélectionnée par un utilisateur du premier dispositif à distance étant indicatif de ce que l'utilisateur a reçu et revu le message de notification d'alarme, et
la sélection de la partie pouvant être sélectionnée entraînant la génération d'un message de réponse, ledit message de réponse étant envoyé au premier serveur central et étant indicatif de ce que le message a été bien reçu.

2. Système de notification d'alarme suivant la revendication 1, dans lequel la partie pouvant être sélectionnée du message de confirmation d'alarme est un hyperlien et l'accès à la page web associée à l'hyperlien est indicatif de ce que le serveur central du message de notification d'alarme a été revu par un utilisateur final.

3. Système de notification d'alarme suivant une des revendications 1 à 2, dans lequel, dans le cas où le serveur central n'a pas reçu d'indication de ce que l'alarme a été revue, un autre message de notification d'alarme est envoyé au premier dispositif utilisateur.

4. Système de notification d'alarme suivant la revendication 3, dans lequel une autre notification est envoyée au premier dispositif utilisateur par SMS et/ou MMS.

5. Système de notification d'alarme suivant une des revendications 3 ou 4, dans lequel une autre notification est envoyée au premier dispositif utilisateur par e-mail et/ou messagerie instantanée.

6. Système de notification d'alarme suivant une des revendications 3 à 5, dans lequel la notification d'alarme est envoyée plusieurs fois, de préférence 12 fois au maximum.

7. Système de notification d'alarme suivant une des revendications 3 à 6, dans lequel plus aucun message n'est envoyé si le serveur central a reçu une indication de ce que l'utilisateur final a revu le message.

8. Système de notification d'alarme suivant une des revendications précédentes, comprenant un ou plusieurs autres serveurs.

9. Système de notification d'alarme suivant une des revendications précédentes, dans lequel le serveur est un serveur virtuel.

10. Procédé comprenant les étapes suivantes consistant à :
surveiller, au niveau d'un premier serveur central (10) d'un système de notification d'alarme, l'état d'un ou de plusieurs alarmes à distance (20a, 20b, 22a, 22b),
générer, au niveau du premier serveur central, une alerte à envoyer à un premier dispositif à distance (30, 32, 34) en réponse à un changement de l'état d'une première alarme à distance,
déterminer, au niveau du premier serveur central, si le premier dispositif à distance est connecté au système de notification d'alarme par une connexion persistante de sorte à :
envoyer, depuis le premier serveur central,
conformément à la détermination de ce que le premier dispositif à distance est connecté au système de notification d'alarme par une connexion persistante,
un message de notification d'alarme au premier dispositif via la connexion persistante,
envoyer, depuis le premier serveur central,
conformément à une détermination de ce que le premier dispositif à distance n'est pas connecté au système de notification d'alarme par une connexion persistante,
un message de notification d'alarme au premier dispositif via un service de notification push,
le message de notification d'alarme comprenant une partie pouvant être sélectionnée, la sélection de la partie pouvant être sélectionnée par un utilisateur du premier dispositif à distance étant indicatif de ce que l'utilisateur a reçu et revu le message de notification d'alarme, et
la sélection de la partie pouvant être sélectionnée entraînant la génération d'un message de réponse, ledit message de réponse étant envoyé au serveur central et indicatif de ce que le message a été revu.

11. Instructions de mémorisation sur support lisible par ordinateur qui, lorsqu'elles sont exécutées par un serveur central d'un système de notification d'alarme suivant la revendication 1, amènent le serveur central à appliquer un procédé suivant la revendication 10.
